Europäisches Patentamt

European Patent Office

Office européen des brevets

(11) Veröffentlichungsnummer: **0 057 391**
**B1**

(12) **EUROPÄISCHE PATENTSCHRIFT**

(45) Veröffentlichungstag der Patentschrift:
06.03.85

(21) Anmeldenummer: **82100440.5**

(22) Anmeldetag: **22.01.82**

(51) Int. Cl.⁴: **B 60 N 3/04**

(54) **Fussraummatte aus Gummi, Kuststoff od. dgl. für Kraftfahrzeuge.**

(30) Priorität: **31.01.81 DE 3103290**

(43) Veröffentlichungstag der Anmeldung:
**11.08.82 Patentblatt 82/32**

(45) Bekanntmachung des Hinweises auf die Patenterteilung:
**06.03.85 Patentblatt 85/10**

(84) Benannte Vertragsstaaten:
**AT BE CH FR GB IT LI LU NL SE**

(56) Entgegenhaltungen:
**DE - U - 1 931 813**
**DE - U - 1 972 414**
**FR - A - 719 424**
**US - A - 1 557 400**

(73) Patentinhaber: **WEGU Gummi- und Kunststoffwerke Walter Dräbing KG, Mündener Strasse 31, D-3500 Kassel (DE)**

(72) Erfinder: **Tönnies, Herbert, Ing. grad., Eichenweg 4, D-3512 Reinhardshagen (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

## Beschreibung

Die Erfindung bezieht sich auf eine Fußraummatte aus Gummi, Kunststoff od. dgl. für Kraftfahrzeuge, mit einem Mattenhauptkörper und einem umlaufenden Rand zur Begrenzung der Matte, wobei der Mattenhauptkörper auf seiner Oberfläche mehrere Felder aufweist und jedes Feld mit zueinander parallel angeordneten Rippen versehen ist.

Eine derartige Fußraummatte ist aus dem DE-U-1 931 813 bekannt. Die dort für den Sommerbetrieb empfohlene Ausbildung sieht auf dem Mattenhauptkörper mehrere Felder vor, wobei jedes Feld mit zueinander parallel angeordneten Rippen versehen ist. Zwischen den Feldern tritt jedoch keine Wechselwirkung ein, da im Übergangsbereich benachbarter Felder den frei endenden Rippen des einen Feldes eine durchgehende Rippe im Nachbarfeld entgegengestellt ist. Hierdurch tritt selbst dann, wenn diese Fußraummatte im Winterbetrieb benutzt würde und trotz der Anordnung der Rippen benachbarter Felder in unterschiedlichen Richtungen zueinander, keine Verteilungswirkung für Schmutzwasser auf. Im Übergangsbereich zwischen zwei Feldern tritt vielmehr eine Sammlungswirkung für Schmutzwasser bei einwirkenden Brems- bzw. Beschleunigungskräften auf. Für den Winterbetrieb wird gemäß dem DE-U-1 931 813 eine Fußraummatte mit Waffel- oder Wabenmuster empfohlen, wobei die Rippen also kreuzweise angeordnet sind, so daß eine große Vielzahl kleiner rechteckiger oder quadratischer Vertiefungen auf der Oberfläche des Mattenhauptkörpers gebildet sind, die nicht miteinander in Verbindung stehen. Jede Vertiefung kann nur eine relativ kleine Wassermenge aufnehmen. Diese Wassermenge ist aber weitgehend »geschützt« untergebracht. Es besteht die Gefahr, daß bei entsprechenden Brems- oder Beschleunigungskräften in den verschiedenen Richtungen ein Teil des Wassers aus einer Vertiefung in die benachbarte Vertiefung übertritt. Bei üblichen von den Schuhen herabtropfenden Wassermengen ist es praktisch ausgeschlossen, daß dieses Wasser über den Rand der Fußraummatte hinwegtritt und auf den Teppichboden der Wagenauskleidung gelangt. Nachteilig ist bei dieser Wabenstrukturmatte, daß dem Wasser jeweils nur eine relativ kleine Oberfläche zur Verdunstung zur Verfügung gestellt wird, so daß derartige Matten besonders langsam abtrocknen.

Derartige Fußraummatten sind auch als Paßformmatten bekannt, wobei der um den Mattenhauptkörper umlaufende Rand in seiner Ausbildung an die Ausbildung des jeweiligen Kraftfahrzeugtyps angepaßt ist. Dies gilt insbesondere für den Einschnitt eines stehend angeordneten Gaspedals sowie für sonstige Rundungen, Wandungen u. dgl. im Fußraum. Für Paßformmatten wie auch für Matten mit rechteckiger oder quadratischer Randausbildung ist es bekannt, die Oberfläche des Mattenhauptkörpers mit einer Vielzahl parallel zueinander verlaufender Rippen zu versehen, die etwa die Höhe des Randes aufweisen und in den Rand einlaufen, so daß jede Vertiefung zwischen zwei benachbarten parallelen Rippen in sich mehr oder weniger abgeschlossen ist. Die Rippen sind dabei in einer einzigen Richtung angeordnet, vorzugsweise parallel zur Längsachse des Kraftfahrzeuges. Wird vom Benutzer des Kraftfahrzeuges beispielsweise an den Schuhen anhaftender Schnee mit in den Fahrgastraum und auf die Fußraummatte eingebracht, so schmilzt dieser infolge der erhöhten Temperatur im Fahrgastraum. Das sich bildende Wasser läuft von den Schuhen herab und gelangt in die rillenartigen Vertiefungen zwischen den parallelen Rippen. Da insbesondere der Platz auf der Fußraummatte, welcher das Gaspedal bedient, weitgehend vorgegeben ist, wird sich bevorzugt in diesem Bereich Wasser bilden. Bei dem Auftreten von Beschleunigungen oder Verzögerungen während der Geradeausfahrt, also in Fahrzeuglängsrichtung wirkend, wird sich das Wasser in den vertieften Rillen nach vorn bzw. hinten in Bewegung setzen, wobei die Gefahr besteht, daß es über den Rand der Matte hinwegtreten und die Auskleidung des Fußraumes benetzen kann. Dies ist insbesondere dann der Fall, wenn die in einer rillenartigen Vertiefung aufgenommene Wassermenge besonders groß ist. Bei Kräften, die in Querrichtung auf das Wasser einwirken, beispielsweise bei Kurvenfahrt, verhindern die Rippen in den meisten Fällen einen Übertritt des Wassers aus einer Vertiefung in die nächste, so daß hier ein vergleichsweise guter Schutz gegen den Übertritt des Wassers über die diesbezüglichen Randbereiche gegeben ist. Schmutzteilchen, die sich in den Vertiefungen zwischen den Rippen festsetzen, können mit einem Wasserstrahl leicht ausgespült oder mit einem Besen o. dgl. leicht entfernt werden. Dem in einer Rille anfallenden Wasser wird bei entsprechenden Brems- und Beschleunigungskräften eine gewisse Oberfläche zur Verfügung gestellt, indem dieses Wasser mehr oder weniger über die ganze Länge der Rille verteilt wird. Die Oberfläche des Wassers, welches dieses einnehmen kann, ist weitgehend bestimmend dafür, in welcher Zeit das Wasser auftrocknet. Ist diese Zeit besonders lang, dann besteht die Gefahr, daß insbesondere das herabhängende Hosenbein in eine derartige mit Wasser gefüllte Vertiefung eintaucht, wo dann eine Saugwirkung eintritt, die eine entsprechende Beschmutzung des Hosenbeins nach sich zieht.

Die US-A-3 082 032 zeigt eine mehrteilige Gitterkonstruktion mit einer Gummiauskleidung des Bodens des Kraftfahrzeuges, die eine Vertiefung an der Stelle aufweist, an denen sich die Füße der Benutzer des Fahrzeuges befinden. In jede solche Vertiefung ist nun eine Metallgitter eingefügt, dessen Rippen, wie aus der Zeichnung ersichtlich ist, keineswegs offen enden, sondern direkt aneinander anschließen. Das Metallgitter

soll dazu dienen, Schneerest von den Schuhen abkratzen zu können.

Eine Verteilung des sich bildenden Wassers mit dem Ziel der Verdunstung wird nicht angestrebt. Es ist vielmehr eine Sammelfunktion vorgesehen, um das sich bildende Wasser mittig in einer Durchbrechung der Karosseriewanne in einem Stutzen nach außen zu führen.

Es sind weiterhin Schalenmatten bekannt, bei denen der Mattenhauptkörper als gewölbte Fläche ausgebildet ist, die etwa im Zentrum der Matte ihren höchsten Punkt aufweist. Die Oberfläche des Mattenhauptkörpers ist mit breiten stollenartigen Rippen versehen, die einem Reifenprofil nicht unähnlich sind, wodurch eine rutschfeste Oberfläche erzeugt wird. Das auf die Matte eingeschleppte Wasser hat die Möglichkeit, besonders schnell auf dem gewölbten Mattenhauptkörper in Richtung auf die Randbereiche abzulaufen, und zwar nur bei einwirkenden Brems- oder Beschleunigungskräften. Da sich das Wasser in diesen Randbereichen sammelt und daher auf dieses gesammelte Wasser ebenso Brems- und Beschleunigungskräfte einwirken, besteht die Gefahr des Übertrittes des Wassers über die Randbereiche. Zu diesem Zweck ist der Rand besonders hoch ausgebildet, was andererseits zur Versteifung der Matte im Randbereich beiträgt. Dieser besonders hohe Rand bildet bei der Benutzung in einiger Hinsicht Schwierigkeiten. Auch die bewußte Ansammlung des Wassers in den gefährdeten Randbereichen ist vergleichsweise nachteilig. Die breit angeordneten, wenig hoch gestalteten Rippen behindern den Durchtritt des Wassers in die Randbereiche kaum. Dem sich in den Randbereichen sammelnden Wasser wird auch hier eine vergleichsweise kleine Oberfläche zur Verfügung gestellt, so daß die Verdunstung des Wassers nicht allzu schnell vor sich geht. Damit besteht die Gefahr, daß bei erneuter Benutzung des Kraftfahrzeuges noch Wasser in den Randbereichen steht und zusätzliches Wasser mit eingeschleppt wird, so daß sich die Wassermenge in unerwünschter Weise anreichert, wodurch die Gefahr des Überschwappens in besonderer Weise gegeben ist.

Der Erfindung liegt die Aufgabe zugrunde, eine Fußraummatte der eingangs beschriebenen Art derart weiterzubilden, daß dem eingeschleppten Wasser eine möglichst große Oberfläche zur Verfügung gestellt wird, damit es schneller verdunsten kann, ohne daß die Gefahr besteht, daß es sich in Randbereichen sammelt und bei dem Einwirken entsprechender Kräfte überschwappt.

Erfindungsgemäß wird dies dadurch erreicht, daß im Übergangsbereich benachbarter Felder die Rippen beider Felder mit Abstand zueinander und unter Richtungswechsel frei enden, so daß die durch die Rippen des einen Feldes gebildeten Kanäle zu mehreren Kanälen des benachbarten Feldes in offener Verbindung stehen. Die Erfindung geht damit von dem Gedanken aus, jedenfalls eine Mehrzahl Felder vorzusehen, die jeweils Bündel von parallelen Rippen und zwischen diesen gebildeten Kanälen aufweisen, wobei die Rippen beider Felder mit Abstand zueinander frei enden und somit infolge des Richtungswechsels zwischen den Rippen benachbarter Felder ganz bewußt die Tatsache ausgenutzt wird, daß Wasser beim Auftreten von Brems- oder Beschleunigungskräften von einem Feld in ein Nachbarfeld übertreten kann. Da das Wasser durch die parallelen Rippen in den Kanälen des einen Feldes in seiner Bewegungsrichtung geführt bzw. diese Richtung vorgegeben ist, erfolgt an den Rippen des Nachbarfeldes eine Umlenkung des Wassers, da es dort in mehrere Kanäle zwischen Rippen eintreten kann. Hierdurch erfolgt eine Verteilung des Wassers auf einer größeren Oberfläche. Da die Richtung der einwirkenden Brems- und Beschleunigungskräfte unregelmäßig wechselt, wiederholt sich dieser Vorgang, wobei jeweils das Wasser auf eine sehr große Oberfläche verteilt wird bzw. dem Wasser eine große Oberfläche zwecks rascherer Verdunstung zur Verfügung gestellt wird. Außerdem wird durch die Änderung der Richtung der Rippen jeweils eine Barriere für das Wasser errichtet, so daß trotz der zur Verfügung gestellten vergrößerten Oberfläche die Gefahr des Übertretens des Wassers in Randbereiche stark gemindert ist. Der Richtungswechsel zwischen den parallelen Rippenbündeln benachbarter Felder kann an sich in verschiedenen Winkelgraden durchgeführt sein, insbesondere in einem 90°-Versatz gegeneinander. Dabei ergeben sich gewisse bevorzugte Raumrichtungen in Fahrzeuglängsrichtung und quer dazu, so daß hier auf die am häufigsten auftretenden Kraftrichtungen durch Brems- und Beschleunigungskräfte Rücksicht genommen ist. Außerdem ergibt sich die Möglichkeit, benachbarte Felder in besonderer Weise aneinander anschließen zu lassen, ohne daß hinsichtlich eines solchen Anschlusses Gefahr besteht, daß das Wasser in diesem Bereich sehr schnell den Rand erreicht.

Besonders vorteilhaft ist es in diesem Zusammenhang, wenn der Mattenhauptkörper in einige wenige gegeneinander abgeschlossene Bereiche unterteilt ist und in jedem Bereich mehrere Felder mit ihren jeweiligen parallelen Rippen vorgesehen sind. Dabei sind die Bereiche voneinander getrennt, so daß es kaum vorkommt, daß Wasser aus einem Bereich in den anderen Bereich übertritt. Der Übertritt wird vielmehr zwischen den Feldern eines Bereiches bewußt herbeigeführt, um dem Wasser die große Verdunstungsoberfläche zur Verfügung zu stellen. Die Abgrenzung in mehrere Bereiche, die gegeneinander weitgehend abgeschlossen sind, ist auch insofern nützlich und sinnvoll, als es beim Hochheben der teilweise mit Wasser gefüllten Matte aus dem Fußraum und dem Ausleeren der Matte vergleichsweise schwerer vorkommen kann, daß sich Wasser in Randbereiche ergießt und dann während des Ausleervorganges über den Rand hinweg in den Fußraum gelangt. Der Hauptvorteil der erfindungsgemäßen Fußraummatte besteht aber darin, daß durch die bewußte Zurverfügungstellung der größeren Oberfläche das Wasser vergleichsweise schneller verdunstet, so daß ein Ausleervorgang weniger oft erforderlich wird. Die erfindungsgemäße Matte läßt sich aber immer noch relativ gut säubern — im Gegensatz zu einer Wabenmatte — weil die Rippen innerhalb der Felder durch eine gezielte Säuberungsrichtung von Schmutz befreit werden können.

Besonders vorteilhaft ist es, wenn durch eine etwa vom Zentrum der Matte ausgehende, kreuzweise diagonal geführte Unterteilung mindestens vier Felder vorgesehen sind und die Rippen in jedem Feld parallel zu dem jeweils zugehörigen Randstück angeordnet sind. Hierdurch ergibt sich ein besonderer Widerstand gegen das Übertreten des Wassers in Randbereich bzw. in Richtung auf den Rand, wobei trotzdem die für die Verdunstung sinnvolle große Oberfläche zur Verfügung gestellt wird. Auch damit lassen sich die Rippen in bevorzugten Raumrichtungen anordnen. Diese besondere Anordnung erbringt auch ein höheres Widerstandsmoment der Matte gegen Biegung beim Ausleeren, d. h. die Matte weist eine geringere Neigung gegen das Abkippen von Randbereichen während des Ausleervorganges auf. Außerdem erhält die Matte durch diese Aufteilung ein sehr gefälliges dekoratives Aussehen, welches durchaus an eine perspektivische Wirkung erinnert, so daß es sich anbietet, im Zentrum der Matte Warenzeichen entsprechender Kraftfahrzeughersteller bzw. Firmenembleme anzubringen, auf die durch die Vierer-Teilung der Blick besonders fällt. Werden mehrere Bereiche geschaffen, beispielsweise zwei oder drei Bereiche, dann können die Rippen über Bereichsgrenzen benachbarter Felder hinweg durchaus parallel zueinander verlaufen. Dies ist aber nicht unbedingt erforderlich. Die parallele Anordnung ergibt jedoch ein ruhiges gefälliges Aussehen der Rippen der Matte.

Die Höhe der Rippen, mit der diese aus der Oberfläche des Mattenhauptkörpers nach oben abstehen, kann vom Zentrum der Matte ausgehend nach außen zunehmen, so daß sich in Richtung auf den Rand jeweils eine Erhöhung des Überschwappwiderstandes ergibt.

Durch die vergleichsweise stärker und höher ausgebildeten Rippen in den Randbereichen werden diese Bereiche besonders verfestigt, was insofern auch sinnvoll ist, als diese Randbereiche häufig die Bereiche sind, an denen an bestimmten Stellen die Fußmatte einer besonderen Beanspruchung ausgesetzt ist. Beispielsweise wird die Ferse des das Gaspedal bedienenden Fußes immer im Randbereich der Matte auf diese etwa an gleicher Stelle einwirken.

Der Abstand der parallelen Rippen eines Feldes voneinander kann vom Zentrum der Matte ausgehend nach außen abnehmen. Durch diese Maßnahme werden die Randbereiche verfestigt. Durch mehr Material wird die Abriebfestigkeit in diesen Randbereichen gefördert.

Es ist auch möglich, die Rippen nach innen schrägstehend anzuordnen, so daß damit ein zusätzlicher Widerstand gegen den Übertritt des Wassers von einer Rippe bzw. einer Vertiefung über die Rippe hinweg nach außen erzielt ist.

Einige Ausführungsbeispiele der Erfindung werden anhand der Zeichnung beschrieben. Es zeigt

Fig. 1 die Draufsicht auf die Fußraummatte in einer ersten Ausführungsform als Paßformmatte,

Fig. 2 die Draufsicht auf eine Fußraummatte in einer zweiten Ausführungsform,

Fig. 3 einen Ausschnitt aus einer Fußraummatte nach einer dritten Ausbildung,

Fig. 4—6 die Gestaltung des Querschnittes der Matten im Randbereich und dem anschließenden Bereich des Mattenhauptkörpers.

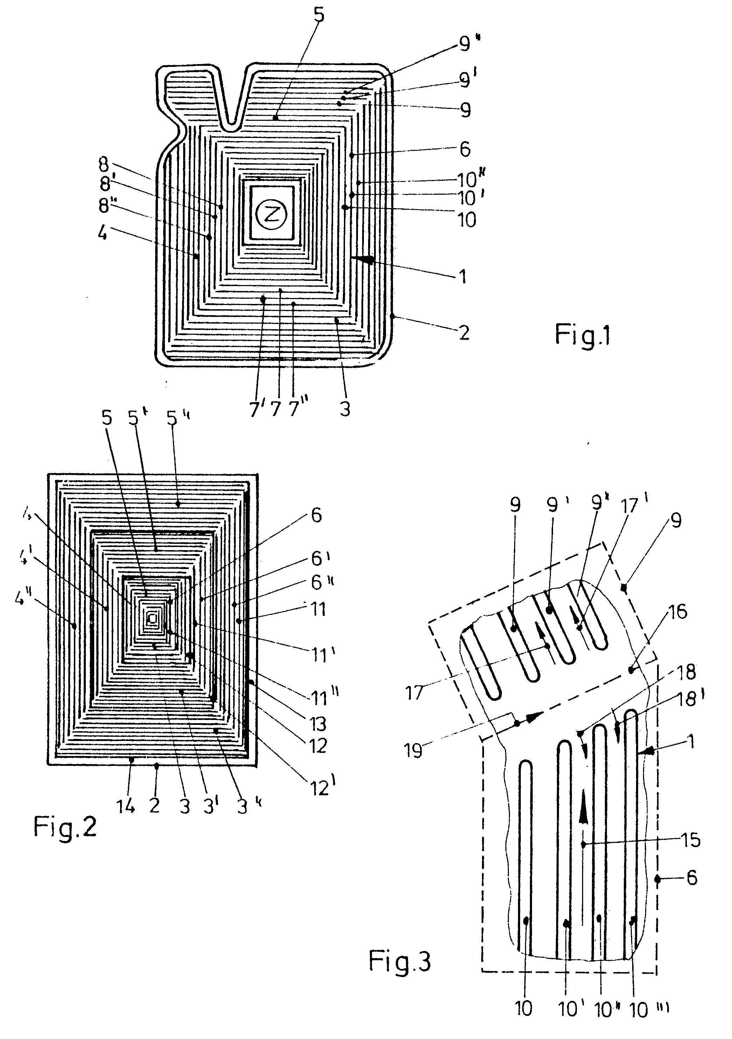

Die in Fig. 1 dargestellte Fußraummatte weist einen Mattenhauptkörper 1 auf, der von einem umlaufenden, vergleichsweise erhöht ausgebildeten Rand 2 nach außen hin begrenzt ist. Die besondere Form des Randes bzw. der Matte ist dem jeweiligen Kraftfahrzeug angepaßt. Die Oberfläche des Mattenhauptkörpers 1 ist hier in vier Felder 3, 4, 5 und 6 eingeteilt. Sämtliche Felder 3, 4, 5 und 6 stehen miteinander in Verbindung. Im Feld 3 sind parallel zueinander offene Rippen 7, 7' und 7'' vorgesehen, wobei damit von innen nach außen nebeneinander befindliche Rippen bezeichnet sind. Die Rippen 7, 7' und 7'' sind offen, weil die Enden der Rippen frei enden und nicht miteinander in Verbindung stehen. Im Feld 4 sind Rippen 8, 8' und 8'' vorgesehen. Analog weisen die Felder 5 und 6 Rippen 9, 9' und 9'' bzw. 10, 10', 10'' usw. auf. Es versteht sich, daß auch mehr als vier Felder 3, 4, 5 und 6 oder auch weniger als vier Felder vorgesehen sein könnten. Die Rippen jedes Feldes sind parallel zueinander und erstrecken sich damit in der gleichen Richtung. Die Rippen benachbarter Felder, beispielsweise des Feldes 3 gegenüber dem Feld 4, sind in ihrer Richtung geändert. Die Richtungen bzw. die Rippen bilden hier einen Winkel von 90" zueinander, weil eine Vierer-Feldeinteilung verwirklicht ist.

Bei der Fußraummatte gemäß Fig. 2 ist wiederum eine Vierer-Einteilung vorgesehen, wobei jedoch noch zusätzlich einzelne Bereiche gebildet sind. Die Anzahl der Felder ist ebenfalls erhöht. Es ergibt sich in der Mitte ein erster Bereich 11, der aus den Feldern 3, 4, 5 und 6 gebildet ist und durch eine umlaufende Verbindungsrippe 12 von dem ringförmigen Nachbarbereich 11' getrennt ist. Der Bereich 11' wird von den Feldern 3', 4', 5' und 6' gebildet. Er ist eingeschlossen zwischen den Verbindungsrippen 12 und 12'. Schließlich gibt es noch einen dritten Bereich 11'' aus den Feldern 3'', 4'', 5'' und 6'', der von der Verbindungsrippe 12' und einer umlaufenden Wulst 13 gebildet ist. Die umlaufende Wulst 13 verläuft parallel zu dem Rand 2 und mit geringem Abstand zu diesem, so daß hier eine umlaufende rillenartige Vertiefung 14 geschaffen ist, die wegen ihrer geringen Erstreckung frei von Rippen ist. Die Verbindungsrippen 12 und 12' und der Wulst 13 sollen die Bereiche 11, 11' und 11'' gegeneinander abschließen, so daß Wasser normalerweise aus einem Bereich nicht in den Nachbarbereich übertreten kann, jedoch sehr wohl von einem Feld in das Nachbarfeld innerhalb eines Bereiches. Beispielsweise kann Wasser im Bereich 11' aus dem Feld 6' in das Feld 5' übertreten, wenn das Kraftfahrzeug bei Geradeausfahrt abgebremst wird.

Zur allgemeinen Erläuterung nach der Grundkonzeption der Fußraummatte sei Fig. 3 betrachtet. Hier ist in vergrößerter Darstellung, beispielsweise in natürlicher Größe, ein kleiner Ausschnitt aus dem Mattenhauptkörper 1 dargestellt. Zur Verallgemeinerung ist hier der 90°-Winkel verlassen und eine Schräglage gezeichnet, wie sie beispielsweise bei einer Achter-Feldeinteilung auftreten kann. Das Feld 6 schließt hier an das benachbarte Feld 9 an, wobei die Rippen 9, 9' und 9'' bzw. 10, 10' und 10'' offen enden. Die Felder 6 und 9 sind also gegeneinander nicht abgegrenzt. Befindet sich beispielsweise Wasser zwischen den Rippen 10, 10' und 10'' im Feld 6, so wird sich dieses Wasser beispielsweise gemäß Pfeil 15 bei einem Bremsvorgang des Fahrzeuges, also bei einer Verzögerung parallel zu den Rippen 10, 10' und 10'' gemäß Pfeil 15 in Bewegung setzen und dabei zunächst eimal mehr oder weniger den restlichen Teil der Vertiefung zwischen den Rippen 10' und 10'' benetzen und schließlich über die Grenze 16 der benachbarten Felder 6 und 9 hinübertreten, wo es teilweise gegen die Rippe 9' gegen die Rippe 9'' geschleudert wird, sich also gemäß den Pfeilen 17 und 17' weiterbewegt und eine zusätzliche Oberfläche benetzt. Dabei wird die kleine Flutwelle des Wassers gebrochen und ihre Energie vernichtet, insbesondere dann, wenn die Rippen 9' und 9'' rechtwinklig zu den Rippen 10' und 10'' verlaufen. Erfolgt anschließend auf das Kraftfahrzeug beispielsweise bei Kurvenfahrt eine Umkehr der Kraftwirkrichtungen, dann kann sich überschüssiges Wasser zwischen den Rippen 9 und 9' bzw. 9' und 9'' entgegengesetzt zu den Pfeilen 17 und 17' in Bewegung setzen und somit entsprechend den Pfeilen 18 und 18' wiederum teilweise zurück und teilweise parallel versetzt zwischen die Rippen 10' und 10'' bzw. 10'' und 10'' gelangen. Da eine Kraftwirkrichtung entsprechend dem Pfeil 19 gleichsam in der hohlen Gasse zwischen zwei Feldern 6 und 9 kaum vorkommt oder jedenfalls äußerst selten vorkommt, ist das Wasser gehindert, schnell in die Randbereiche der Matte vorzudringen. Ihm wird aber trotzdem eine relativ große Oberfläche innerhalb eines Bereiches bzw. benachbarter Felder zur Verfügung gestellt, damit es schnell verdunsten kann. Wenn weiterhin mehrere Bereiche 11, 11' und 11'' gebildet sind, wie dies anhand Fig. 2 erläutert wurde, besteht noch eine zusätzliche Barriere zwischen den einzelnen Bereichen.

Obwohl nur eine Vierer- und eine Achter-Einteilung der Felder und eine Unterteilung in drei Bereiche 11, 11', 11'' dargestellt wurde, versteht es sich, daß an sich die Anzahl bzw. Mehrzahl der Felder frei gewählt werden kann. Ebenso können mehrere Bereiche vorgesehen sein. Sinnvoll ist es aber auf jeden Fall, zwecks Erhöhung des Übertrittswiderstandes, wenn solche Felder, die an den Rand angrenzen, auch Rippen aufweisen, deren Richtung parallel zu dem jeweiligen Rand gerichtet ist.

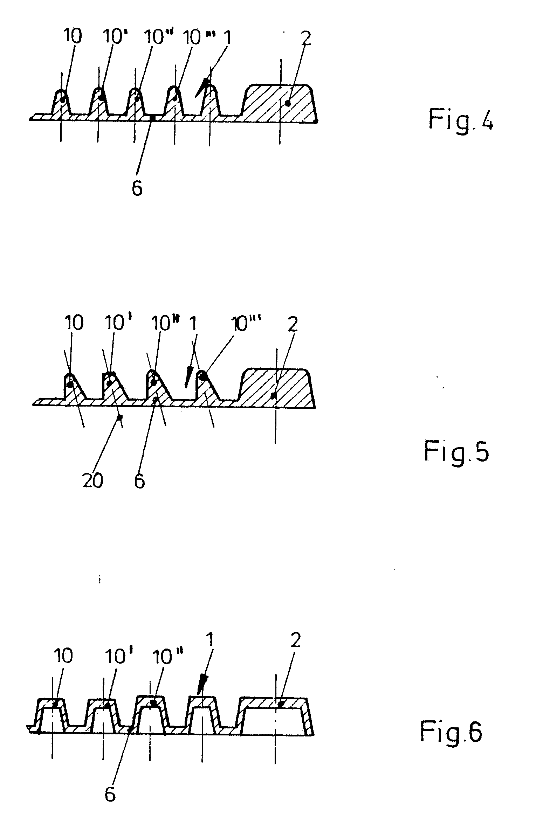

Die Fig. 4 bis 6 zeigen Ausbildungen der Matte im Randbereich und im anschließenden Bereich des Mattenhauptkörpers. Gemäß Fig. 4 sind die Rippen 10, 10', 10'', 10''' usw. gleichabständig vorgesehen. Die Höhe der aufeinanderfolgenden Rippen wächst jedoch von innen nach außen. Gemäß Fig. 5 ist eine Achse 20 der Rippen 10, 10', 10'' usw. nach dem Zentrum der Matte hin schrägstehend angeordnet, so daß auch hierdurch der Widerstand des Wassers gegen Übertreten nach außen in besonderer Weise erhöht ist. Zusätzlich nimmt die Höhe der Rippen von innen nach außen zu.

Gemäß Fig. 6 sind die Rippen 10, 10' und 10'' von unten hohl ausgebildet. Die Höhe wächst von innen nach außen und auch die Breite der Rippen kann von innen nach außen zunehmen bzw. die Breite der Vertiefung zwischen zwei Rippen von innen nach außen abnehmen.

## Patentansprüche

1. Fußraummatte aus Gummi, Kunststoff o. dgl. für Kraftfahrzeuge, mit einem Mattenhauptkörper und einem umlaufenden Rand zur Begrenzung der Matte, wobei der Mattenhauptkörper auf seiner Oberfläche mehrere Felder aufweist und jedes Feld mit zueinander parallel angeordneten Rippen versehen ist, dadurch gekennzeichnet, daß im Übergangsbereich benachbarter Felder (3, 4, 5, 6 bzw. 3', 3' usw.) die Rippen (7, 7', 7'' und 8, 8', 8'') beider Felder (z. B. 3 bzw. 4) mit Abstand zueinander und unter Richtungswechsel frei enden, so daß die durch die Rippen (7 und 7' usw.) des einen Feldes (z. B. 3) gebildeten Kanäle zu mehreren Kanälen des benachbarten Feldes (z. B. 4) in offener Verbindung stehen.

2. Fußraummatte nach Anspruch 1, dadurch gekennzeichnet, daß der Mattenhauptkörper (1) in einige wenige gegeneinander abgeschlossene Bereiche (11, 11', 11'') unterteilt ist, und daß in jedem Bereich (z. B. 11') mehrere Felder (3', 4', 5', 6') mit ihren jeweiligen parallelen Rippen (7, 7'; 8, 8'; 9, 9'; 10, 10' usw.) vorgesehen sind.

3. Fußraummatte nach Anspruch 1 oder 2, dadurch gekennzeichnet, daß durch eine etwa vom Zentrum der Matte ausgehende, kreuzweise diagonal geführte Unterteilung mindestens vier Felder (4, 4, 5 und 6) vorgesehen sind, und daß die Rippen in jedem Feld parallel zu dem jeweils zugehörigen Randstück angeordnet sind.

4. Fußraummatte nach einem der Ansprüche 1 bis 3, dadurch gekennzeichnet, daß die Höhe der Rippen (z. B. 10, 10', 10'', 10''' usw.), mit der diese aus der Oberfläche des Mattenhauptkörpers (1) nach oben abstehen, vom Zentrum der Matte ausgehend nach außen zunimmt.

5. Fußraummatte nach einem der Ansprüche 1 bis 4, dadurch gekennzeichnet, daß der Abstand der parallelen Rippen (z. B. 10, 10', 10'', 10''' usw.) eines Feldes (6, 6', 6'' usw.) voneinander vom Zentrum der Matte ausgehend nach außen abnimmt.

6. Fußraummatte nach einem der Ansprüche 1 bis 5, dadurch gekennzeichnet, daß die Rippen (z. B. 10, 10' usw.) nach innen schrägstehend angeordnet sind.

7. Fußraummatte nach Anspruch 3, dadurch gekennzeichnet, daß zwecks Unterteilung in einzelne Bereiche (11, 11', 11'') einzelne Rippen (12, 12' bzw. 13) benachbarter Felder (z. B. 6' und 5') untereinander verbunden sind.

## Claims

1. Floor mat made of rubber, plastic or the like for motor vehicles, with a main mat body and a surrounding border for limitation of the mat, the main mat body having on its surface several regions and each region being provided with ribs arranged in parallel, characterised in that in the transition area between neighbouring regions (3, 4, 5, 6 or 3', 4' etc.) the ribs (7, 7', 7'' and 8, 8', 8'') of the two regions (e. g. 3 and 4) end freely at a distance from one another and making a change in direction, so that the channels formed by the ribs (7 and 7' etc.) of the one region (e. g. 3) are openly joined to several channels of the neighbouring region (e. g. 4).

2. Floor mat according to Claim 1, characterised in that the main mat body (1) is subdivided into a small number of mutually closed-off areas (11, 11', 11'') and in that several regions (3', 4', 5', 6') with their respective parallel ribs (7, 7'; 8, 8'; 9, 9'; 10, 10', etc.) are provided in each area (e. g. 11').

3. Floor mat according to Claim 1 or 2, characterised in that a subdivision led diagonally crosswise and starting from approximately the centre of the mat means that at least four regions (3, 4, 5 and 6) are provided, and in that the ribs each region are arranged in parallel to their associated border piece in each case.

4. Floor mat according to one of Claims 1 to 3, characterised in that the height of the ribs (e. g. 10, 10', 10'', 10''', etc.) with which they stand up from the surface of the main mat body (1), increases towards the outside starting from the centre of the mat.

5. Floor mat according to one of Claims 1 to 4, characterised in that the distance of the parallel ribs (e. g. 10, 10', 10'', 10''', etc.) of a region (6, 6', 6'', etc.) from one another reduces towards the outside starting from the centre of the mat.

6. Floor mat according to one of Claims 1 to 5, characterised in that the ribs (e. g. 10, 10', etc.) are arranged standing obliquely towards the inside.

7. Floor mat according to Claim 3, characterised in that, for the purposes of subdivision into individual areas (11, 11', 11''), individual ribs (12, 12' or 13) of neighbouring regions (e. g. 6' and 5') are joined to one another.

## Revendications

1. Tapis de plancher en caoutchouc, matière synthétique ou analogue pour véhicule automobile, comportant un corps principal de tapis et un bord périphérique pour la délimitation du tapis, la surface du corps principal comportant plusieurs zones et chaque zone étant munie de nervures parallèles entre elles, caractérisé en ce que, dans le secteur de transition entre des zones voisines (3, 4, 5, 6 et/ou 3', 3'', etc.), les nervures (7, 7', 7'' et 8, 8', 8'') des deux zones (par exemple 3, 4) se terminent librement à une certaine distance les unes des autres et avec un changement de direction, de sorte que les canaux formés par les nervures (7 et 7', etc.) de l'une des zones (par exemple 3) sont en liaison ouverte avec plusieurs canaux de la zone voisine (par exemple 4).

2. Tapis de plancher suivant la revendication 1, caractérisé en ce que le corps principal (1) du tapis est divisé en quelques secteurs (11, 11', 11''), qui sont fermés entre eux et peu nombreux et que, dans chaque secteur (par exemple 11'), on prévoit plusieurs zones (3', 4', 5', 6'), avec leurs nervures correspondantes parallèles (7, 7'; 8, 8'; 9, 9'; 10, 10', etc.).

3. Tapis de plancher suivant une des revendications 1 et 2, caractérisé en ce que, par le moyen d'une division partant approximativement du centre du tapis et croisée en digonale, on prévoit au moins quatre zones (3, 4, 5 et 6) et que, dans chaque zone, les nervures sont parallèles au morceau de bord correspondant.

4. Tapis de plancher suivant une des revendications 1 à 3, caractérisé en ce que la hauteur des nervures (par exemple 10, 10', 10'', 10''', etc.) par rapport à la surface du corps principal de tapis (1) augmente du centre du tapis vers l'extérieur.

5. Tapis de plancher suivant une des revendications 1 à 4, caractérisé en ce que la distance entre les nervures parallèles (par exemple 10, 10', 10'', 10''', etc.) d'une zone (6, 6', 6'', etc.) diminue du centre du tapis vers l'extérieur.

6. Tapis de plancher suivant une des revendications 1 à 5, caractérisé en ce que les nervures (par exemple 10, 10', etc.) sont penchées vers l'intérieur.

7. Tapis de plancher suivant la revendication 3, caractérisé en ce que, pour une division en différents secteurs (11, 11', 11''), différentes nervures (12, 12' ou 13) de zones voisines (par exemple 6' et 5') sont reliées entre elles.

Fig.1

Fig.2

Fig.3

10  10'  10"  10"'  1  2

Fig. 4

6

10  10'  10"  1  10"'  2

Fig. 5

20  6

10  10'  10"  1  2

Fig. 6

6

9